**Europäisches Patentamt**

**European Patent Office**

**Office européen des brevets**

(19)

(11) Veröffentlichungsnummer: **0 114 999**
**B1**

(12) # EUROPÄISCHE PATENTSCHRIFT

(45) Veröffentlichungstag der Patentschrift:
27.04.88

(21) Anmeldenummer: **83112655.2**

(22) Anmeldetag: **15.12.83**

(51) Int. Cl.⁴: **B 29 C 47/76**

(54) Entgasungseinrichtung an einem Schneckenextruder oder dergleichen.

(30) Priorität: **30.12.82 DE 3248659**

(43) Veröffentlichungstag der Anmeldung:
**08.08.84 Patentblatt 84/32**

(45) Bekanntmachung des Hinweises auf die Patenterteilung:
**27.04.88 Patentblatt 88/17**

(84) Benannte Vertragsstaaten:
**BE CH DE FR GB IT LI NL**

(56) Entgegenhaltungen:
DE-A-2 400 271
DE-A-3 227 983
DE-B-1 554 866
DE-B-1 679 878
DE-C-915 689
US-A-4 117 548

KUNSTSTOFFE, Band 71, Nr. 1, Januar 1981,
München; H. WERNER "Entgasen von Kunststoffen
in mehrwelligen Schneckenmaschinen", Seiten 18-
26
WITTFOHT "Kunststofftechnisches Wörterbuch"
1978, CARL HANSER VERLAG, München, Teil 3,
Seite 367
KUNSTSTOFFE, Band 64, Nr. 4, April 1974,
München; C.J. SIMS et al. "Verarbeiten von
Polyamid 66 mit erhöhtem Feuchtegehalt mit einer
Entgasungsschnecke", Seiten 175-177

(73) Patentinhaber: **Peroxid- Chemie GmbH, Dr.- Gustav-
Adolph- Strasse 2, D-8023 Höllriegelskreuth bei
München (DE)**

(72) Erfinder: **Rossberger, Erwin, Dr.,
Jettenhausnerstrasse 2, D-8021 Grossdingharting
(DE)**
Erfinder: **Weinmaier, Josef, Dr.,
Wolfratshauserstrasse 76, D-8023 Pullach (DE)**
Erfinder: **Ailler, Nikolaus, Münchnerstrasse 29,
D-8195 Egling (DE)**

(74) Vertreter: **Weickmann, Heinrich, Dipl.- Ing.,
Patentanwälte Dipl.- Ing. H.Weickmann Dipl.-
Phys.Dr. K.Fincke Dipl.- Ing. F.A.Weickmann
Dipl.- Chem. B. Huber Dr.- Ing. H. Liska Dipl.-
Phys.Dr. J. Prechtel Postfach 860820, D-8000
München 86 (DE)**

(56) Entgegenhaltungen: (Fortsetzung)
PLASTVERARBEITER, Band 28, Nr. 5, Mai 1977,
Speyer; H. BREUER "Die Bedeutung der
Vakuumtechnik für die Extrusion unter besonderer
Beachtung der PVC-Verarbeitung", Seiten 233-240

**0 114 999**

**Beschreibung**

Die Erfindung betrifft eine Entgasungseinrichtung an einem Schnecken-Extruder oder dergl., mit einem wenigstens eine Schnecke aufnehmenden Schneckengehäuse, welches mit wenigstens einem in den Schneckenraum des Gehäuses von oben her einmündenden Entgasungskanal und einer am Entgasungskanal angeordneten Rückfördereinrichtung für aus dem Schneckenraum in den Entgasungskanal eingedrungenes Material versehen ist, wobei die Rückfördereinrichtung eine innerhalb des Entgasungskanals mit zur Schneckenachse im wesentlichen paralleler Walzenachse angeordnete, zwischen sich und den beiden Längsseitenwänden des Entgasungskanals jeweils einen Durchgang bildende Förderwalze umfaßt, sowie einen sich längs der Förderwalze erstreckenden Abstreifer für auf dem Walzenumfang angelagertes Material aus dem Schneckenraum, welcher in demjenigen Durchgang angeordnet ist, der in Walzendrehrichtung auf den Schneckenraum unmittelbar folgt.

Eine Entgasungseinrichtung dieser Art ist aus der DE-B-1 554 866 bekannt. Der Abstreifer ist hierbei in nächster Nähe zur Schnecke angeordnet.

Der Erfindung liegt die Aufgabe zugrunde, eine zuverlässig rückfördernde Entgasungseinrichtung mit verbesserter Abdampf-Wirksamkeit bereitzustellen.

Diese Aufgabe wird dadurch gelöst, daß der Abstreifer etwa in Höhe der Walzenachse oberhalb einer Schnecke des Schneckenraums angeordnet ist, derart, daß vom Abstreifer fallendes Material von der Schnecke mitgenommen wird.

Die Abdampffläche wird durch die erfindungsgemäßen Maßnahmen wesentlich vergrößert, da die Oberfläche des Extruder-Materials in dem in Walzendrehrichtung auf den Schneckenraum folgenden Durchgang sowie der Walzenumfangsabschnitt der Förderwalze bis zum Abstreifer hinzu kommt. Die effektive Abdampffläche kann somit sogar größer als der Entgasungsquerschnitt sein. Der Stand der Technik gibt hierfür kein Vorbild. Beim Stand der Technik wird die Rückfördereinrichtung ausschließlich in Förderrichtung zum Schneckenraum betrieben, wohingegen bei der Erfindung die Walze einerseits in Richtung auf den Schneckenraum fördert, um ein Hochquellen des Extruder-Materials im Kanal zu verhindern; zusätzlich wird jedoch bei der Erfindung die Förderwalze entgegengesetzt zur Förderrichtung betrieben, wobei das von der Förderwalze mitgenommene Material vom etwa in Höhe der Walzenachse angeordneten Abstreifer vom Walzenumfang abgestrichen und in einen Fangbereich einer der Schnecken bzw. der Schnecke fallengelassen wird. Auf diese Weise wird die Rückführung auch dieses Extruder-Materials sichergestellt. Die Abdampfwirksamkeit ist aufgrund der wesentlich erhöhten Abdampfoberfläche im Durchgang deutlich verbessert.

Bei den vorgesehenen hohen Pastenviskositäten wird von der Förderwalze auch relativ weit weg liegendes Material mitbefördert, so daß der Durchmesser der Walze um einiges kleiner gewählt werden kann als die entsprechende Abmessung des im Querschnitt vorzugsweise rechteckigen Entgasungskanals. Vorzugsweise ist vorgesehen, daß der Förderwalzendurchmesser etwa das 0,4- bis 0,9-fache, besser das 0,5- bis 0,7-fache, am besten das etwa 0,65-fache des lichten Abstands der zur Förderwellenachse parallelen Längsseitenwände des Entgasungskanals beträgt.

Insgesamt ergibt sich eine relativ große Abdampffläche, welche sowohl von den Oberflächen des in den Entgasungskanal hochgequollenen Extrudermaterials beidseits der mehr oder weniger weit in das Extrudermaterial eintauchenden Förderwalze gebildet ist, wie auch von der an der Förderwalze haftenden und schließlich vom Abstreifer vom Walzenumfang entfernten Materialschichtfläche gebildet ist. Der wenigstens eine offene Durchgang bietet einen ausreichenden Gasdurchgangsquerschnitt für die freigewordenen Gase.

Die erfindungsgemäße Entgasungseinrichtung läßt sich mit besonderem Vorteil auch in Verbindung mit einer Vakuumabsaugeinrichtung einzusetzen, da die Rückfördereinrichtung auch hier zuverlässig für ein Verbleiben des Materials im Schneckenraum sorgt. Hierzu wird vorgeschlagen, einen das äußere Entgasungskanalende abdeckenden Absaugaufsatz am Schneckengehäuse einzusetzen, welcher an eine Vakuumabsaugeinrichtung angeschlossen ist. Um den Antriebsmotor für die Rückfördereinrichtung außerhalb des Vakuumbereichs betreiben zu können, wird vorgeschlagen, daß der Absaugaufsatz eine Vakuumdurchführung für eine die Rückfördereinrichtung antreibende, mit einem Antriebsmotor, vorzugsweise Durckluftmotor, verkoppelte Antriebswelle aufweist. Als Antriebsmotor kommt beispielsweise ein Elektromotor oder auch ein Druckluftmotor in Frage.

Besonders einfacher Aufbau ergibt sich im Falle einer Förderschnecke, da dann die Antriebswelle mit der Förderschneckenwelle starr verbunden, vorzugsweise mit dieser einstückig ausgebildet sein kann.

Für den Fall der Verwendung einer Förderwalze wird vorgeschlagen, daß die Antriebswelle mit der Walzenwelle über ein Getriebe, vorzugsweise Stirnradgetriebe, verbunden ist.

Um eine gründliche Entgasung bzw. Trocknung sicherzustellen und um der Bildung von Ablagerungen in der Rückfördereinrichtung entgegenzuwirken, wird vorgeschlagen, daß die Rückfördereinrichtung heizbar ist, vorzugsweise durch Hindurchleiten von Heizmedium durch einen Gehäusewandinnenraum eines doppelwandigen Gehäuses der Rückfördereinrichtung.

Die Erfindung betrifft ferner einen Extruder mit einer Entgasungseinrichtung der vorstehend beschriebenen Art, welcher als Doppelwellen-Extruder, vorzugsweise mit gleichsinnig drehenden Schnecken, ausgebildet ist. Um möglichst große Abdampffläche des Materials zu erhalten, also möglichst grossen Kanalquerschnitt, wird vorgeschlagen, daß die Kanalachse senkrecht zu der durch die beiden Schneckenachsen definierten Ebene, vorzugsweise in etwa gleichem Abstand, zu beiden Schneckenachsen verläuft. Der Begriff "Abdampffläche"

2

beschränkt sich in diesem Zusammenhang natürlich nicht auf die Abgabe von Dampf durch das Material sondern auf die Abgabe von den Gasen jeglicher Herkunft.

Die Erfindung betrifft ferner einen Extruder mit einer Entgasungseinrichtung der vorstehend beschriebenen Art, welcher als Einwellen-Extruder mit axial, vorzugsweise impulsartig bewegbarer Schnecke, ausgebildet ist.

Um bei derartigen Extrudern aber auch z. B. bei Planet-Walzen-Extrudern, Schnecken-Knetern oder Schnecken-Spritzgießmaschinen eine möglichst weitgehende Entgasung zu erhalten, wird erfindungsgemäß vorgeschlagen, zwei in Richtung der Schneckenraum-Längsachse hintereinander mit Abstand angeordnete Entgasungseinrichtungen der erfindungsmäßen Art einzusetzen.

Für einen sicheren Ablauf des Verarbeitungsverfahrens mit Hilfe des Schnecken-Extruders oder dergl. ist es von wesentlicher Bedeutung, daß das Material mit hoher Gleichmäßigkeit dem Extruder zugeführt wird. Hierfür ist erfindungsgemäß eine Dosiereinrichtung, vorzugsweise eine Exzenter-Schneckenpumpe an der Materialzugabeöffnung des Extruders vorgesehen.

Die Erfindung wird im folgenden an bevorzugten Ausführungsbeispielen anhand der Zeichnung erläutert. Es zeigt:

Fig. 1 eine grobschematische Seitenansicht eines Schnecken-Extruders mit Entgasungseinrichtungen;

Fig. 2 einen Schnitteiner erfindungsgemäßen Ausführungsform der Entgasungseinrichtung (Schnitt nach Linie III-III in Fig. 4); und

Fig. 3 einen Schnitt der Anordnung in Fig. 2 nach Linie IV-IV.

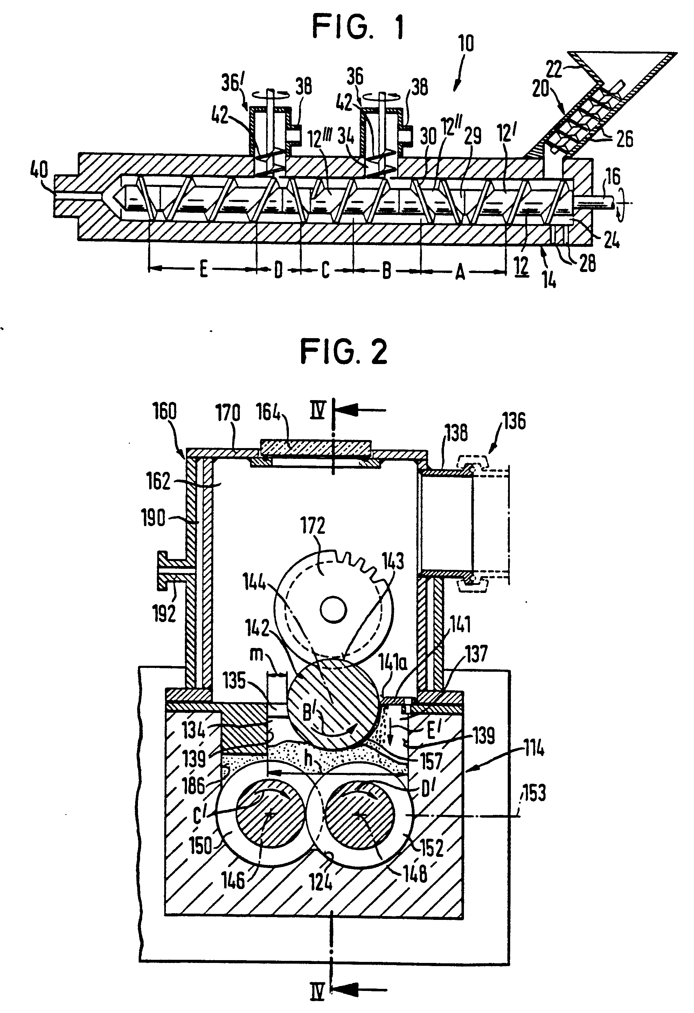

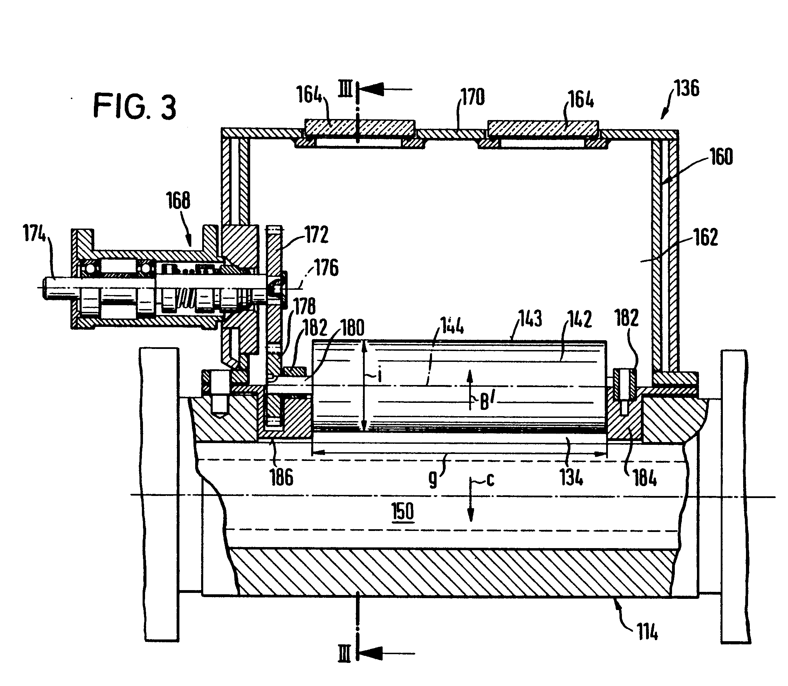

Der in Fig. 1 grobschematisch dargestellte Schnecken-Extruder 10 besteht aus einem eine oder mehrere Schnecken 12 aufnehmenden Schneckengehäuse 14. Der Einfachheit halber ist in Fig. 1 lediglich eine Schnecke eines Zweiwellen-Extruders, wie dieser in den Fig. 2 und 3 näher erkennbar ist, dargestellt. Am in Fig. 1 rechten Ende des Gehäuses 14 ist eine Antriebswelle 16 der Schnecke 12 aus dem Gehäuse 14 herausgeführt zum Anschluß an einen nicht dargestellten Motor. Das zur Verarbeitung im Extruder 10 vorgesehene Material wird dem Exzenter 10 durch eine symbolisch dargestellte Exzenter-Schneckenpumpe 20 (mit Zugabetrichter 22) zugeführt, welche in den die Schnecke bzw. Schnecken aufnehmenden Schneckenraum 24 am in Fig. 1 rechten Extruderende einmündet. Bei der Verdichtung in der Exzenter-Schneckenpumpe 20 bzw. am rechten Schneckenende durch die Kompression des materials freiwerdendes Wasser kann bereits hier abgeleitet werden, was durch Entwässerungskanäle 26 bzw. 28 in Fig. 1 symbolisch angedeutet ist.

Die Schnecke 12 besteht aus mehreren miteinander drehfest verbundenen Abschnitten, welche sich durch unterschiedliche Steigung oder auch durch unterschiedliche Förderrichtung unterscheiden können. Im dargestellten, rein schematischen Beispiel folgt auf einen relativ langen Abschnitt 12' am rechten Schneckenende ein relativ kurzer Abschnitt 12'' mit entgegengesetzter Förderrichtung, welcher aufgrund seiner geringeren Länge lediglich zu einem Anstau des Extrudermaterials in diesem Bereich führt. Ein in Fig. 1 mit A bezeichneter Axialabschnitt des Extruders 10 kann daher als Anstau- oder Kompressionszone bezeichnet werden, die einen vakuumdichten Abschluß der nachfolgenden Zonen gegen Atmosphäre darstellt. Auf dem Kern 29 der Schnecke 12 können neben den dargestellten Gängen 30 auch noch weitere Gänge vorgesehen sein/oder radial abstehende Stifte zur Förderung der Vermischung des zugeführten Materials. An den kurzen Abschnitt 12'' schließt sich ein Abschnitt 12''' an, welcher in bezug auf seine Förderrichtung dem ersten Abschnitt 12' entspricht. Dies hat zur Folge, daß der Druck im Material (Paste) abfällt; auf die Zone A folgt dementsprechend eine mit B bezeichnete Dekompressionszone. Aufgrund des Druckabfalls im Material werden Wasserdampf sowie gelöste Gase frei. Im Bereich dar Dekompressionszone B ist das Gehäuse 14 mit einem radialen Entgasungskanal 34 versehen, welcher Teil einer anhand von Fig. 2 noch näher zu erläuternden Entgasungseinrichtung 36 ist. Durch diesen Entgasungskanal 34 können die in der Dekompressionszone B freigesetzten Gase bzw. Dämpfe entweichen. Zur Unterstützung dieses Vorgangs ist die Entgasungseinrichtung 36 über einen Vakuumanschlußstutzen 38 an eine nicht dargestellte Vakuumabsaugeinrichtung angeschlossen. Auch kann das Schneckengehäuse 14 wenigstens im Bereich der Dekompressionszone B heizbar ausgebildet sein, um das Abdampfen zu verstärken.

An die Dekompressionszone B schließt sich eine zweite Anstauzone C an, auf die eine zweite Dekompressionszone D folgt, was durch entsprechende Ausbildung der einzelnen Schneckenabschnitte in diesem Bereich, wie vorstehend bereits beschrieben, erreicht wird. In dem Bereich dieser Zone D ist eine zweite Entgasungseinrichtung 36' entsprechend der ersten Entgasungseinrichtung 36 vorgesehen. Es schließt sich wiederum eine Anstauzone E an zum vakuumdichten Abschluß des anschließenden Bereichs gegen Atmosphäre. An die Austragsöffnung 40 des Extruders 10 am in Fig. 1 linken Extruderende schließt sich eine nicht dargestellte Kompaktierungs- und Strangschneidevorrichtung an.

In den Fig. 2 und 3 ist eine erfindungsgemäße Ausführungsform der Entgasungseinrichtung dargestellt, welche allgemein mit 136 bezeichnet ist. Die Förderschnecke 42 des Entgasungseinrichtung 36 in Fig. 1 ist hierbei ersetzt durch eine Förderwalze 142 mit zylindrischer Umfangsfläche 143 mit anderer Orientierung; die Walzenachse 144 verläuft parallel zu den Achsen 146, 148 der beiden Schnecken 150 und 152. Der Rotationssinn (Pfeil B' in Fig. 2) ist entgegengesetzt zum Rotationssinn der beiden gleichsinnig rotierenden Schnecken 146 und 148 (Pfeile C' und D').

Die Förderwalze 142 ist in einen Entgasungskanal 134 eingesetzt, dessen zum Kanalquerschnitt senkrechte Kanalachse senkrecht auf der durch die an beiden Achsen 146 und 148 definierten Ebene 153 steht. Im Querschnitt ist der Kanal 134 rechteckig. Die zu den Achsen 146 und 148 (und 144) parallele Länge g des Kanalquerschnitts entspricht der axialen Länge der Förderwalze 142; die hierzu senkrechte Breite h des Kanalquerschnitts übersteigt den Durchmesser i der Förderwalze 142. Die Förderwalze 142 ist gemäß Fig. 3 derart angeordnet, daß ihre Achse 144 in Höhe der oberen Kanalmündung etwa in Breitenmitte verläuft. Die Walze 142 schließt demnach den Kanal 134 nur teilweise ab. In Fig. 3 links der Walze 142 ist ein erster Durchgang 135 ausgebildet, welcher zum einen durch die Walzenumfangsfläche 143 und zum anderen durch eine zu den Achsen 146, 148 parallele Seitenfläche 139 des Kanals 134 begrenzt ist. Der lichte Abstand m zwischen der Seitenfläche 139 des Kanals 134 und der Walzenumfangsfläche 143 beträgt etwa das 0,15-fache der Breite h des Kanalquerschnitts.

Dementsprechend ist auf der anderen Seite ein Durchgang 137 ausgebildet. Letzterer wird jedoch durch einen am (einteiligen) Schneckengehäuse 114 starr angebrachten, längs der Fläche 139 verlaufenden Abstreifer 141 etwa in Höhe der Achse 144 abgeschlossen. Mit einer Abstreiferkante 141a liegt der Abstreifer 141 am Außenumfang (längs einer Mantellinie) der Walze 142 an, so daß er am Walzenumfang angelagertes Pastenmaterial 157 bei der Rotation der Walze 142 in Richtung B' von der Walze abstreift und nach unten in den Bereich der in Fig. 3 rechten Walze 148 fallen läßt (Pfeil E' in Fig. 2).

Der Kanal 134 samt Walze 142 wird an der Außenseite des Gehäuses 114 von einem Absaugaufsatz 160 überdeckt, welcher entsprechend dem Aufsatz 60 gemäß Fig. 2 wiederum für eine vakuumdichte Abschließung des Kanals 134 zur Atmosphäre hin sorgt, wobei wiederum ein Absaugstutzen 138 vorgesehen ist zum Anschluß an eine nicht dargestellte Vakuumabsaugeinrichtung.

Der Antrieb der Walze 142 erfolgt über einen nicht dargestellten Druckluftmotor, dessen in Fig. 3 erkennbare Antriebswelle 174 über eine Vakuumdurchführung 168 in den Innenraum 162 des Aufsatzes 160 geführt ist mit zu den Achsen 146, 148, 144 paralleler Wellenachse 176. Am inneren Wellenende ist ein Stirn-Zahnrad 172 befestigt, welches mit einem zweiten Stirnzahnrad 178 an einem Ende einer Welle 180 der Walze 142 kämmt. Die Welle 180 steht an beiden axialen Enden der Walze 142 über diese vor und ist dort jeweils in einem Drehlager 182 gelagert. Die beiden Drehlager 182 sind starr mit einem Einsatzteil 184 verbunden, welches in das Gehäuse 114 eingesetzt ist und eine entsprechende in den Schneckenraum 124 einmündende Einsatzöffnung 186 (bis auf den Kanal 134) abschließt.

Der Aufsatz 160 ist mit zwei Beobachtungsfenstern 164 in der dem Kanal 134 gegenüberliegenden Deckenwand 170 versehen. Mit dem Gehäuse 119 ist der Aufsatz 160 vakuumdicht verflanscht.

Um eine zwischenzeitliche Abkühlung des Extrudermaterials im Bereich der Entgasungseinrichtung 136 auszuschließen, ist das Gehäuse 114 heizbar. Hierzu sind zumindest die Seitenwände doppelwandig ausgeführt, wie in Fig. 2 erkennbar. Der Doppelwandinnenraum 190 ist mit entsprechenden Anschlußstutzen zum Zuführen bzw. Abführen von Heizmedium, insbesondere Warmwasser oder Heißdampf, ausgebildet. Ein derartiger Stutzen 192 ist in Fig. 2 erkennbar.

Im Betrieb verhindert die rotierende Walze 142, daß das durch die beiden Schnecken 150 und 152 in den Dekompressionsbereich und damit in den Bereich des Kanals 134 beförderte pastenförmige Material im Kanal 134 hoch steigt und schließlich in den Durchgang 135 eintritt und über die Gehäuseaußenseite hinaus in den Innenraum 162 des Aufsatzes 160 eindringt. Die in Pfeilrichtung B' drehende Walze 142 nimmt das pastöse Material in Richtung B mit, bis es schließlich in den Fangbereich der in Fig. 2 rechten Schnecke 152 gelangt, deren Förderrichtung (in Fig. 2 nach rechts) die gleiche ist wie die an der Unterseite der Walze 142. Die Oberfläche der Förderwalze 142 ist hierfür derart ausgebildet, daß die Paste adhäriert. Dementsprechend bleibt am Walzenumfang entweder eine durchgehende oder eine unterbrochene Schicht 157 von Extrudermaterial hängen, sobald sich der entsprechende Walzenumfangsabschnitt von dem in den Kanal 134 hochgequollenen Material löst. Diese in Fig. 2 eingezeichnete Schicht 157 bewegt sich weiter zum Abstreifer 141 und wird von diesem von der Walze 142 entfernt, woraufhin das Material nach unten abfällt (Pfeilrichtung E') und in den Fangbereich der Walze 152 gelangt. Diese Schicht 157 bildet eine zusätzliche, relativ große Verdampfungs- und Entgasungsfläche, die unter dem herrschenden Vakuum für eine schnelle und gründliche Entfeuchtung bzw. Entgasung sorgt. Die in dem durch den Abstreifer 141 abgeschlossenen Bereich rechts der Förderwalze 142 in Fig. 2 gebildeten Gase können unter der Walze 142 hindurch ohne weiteres in den Bereich links der Walze 142 gelangen und durch den Durchgang 135 nach oben hin entweichen. Dies liegt daran, daß das Pastenmaterial unterhalb der Walze 142 in stetiger Bewegung ist und keinesfalls durchgehend glatt an der Walze 142 anliegt, so daß stets Durchgangskanäle für gebildete Gase vorhanden sind. Man kann jedoch auch zusätzlich den Abstreifer 142 mit Durchgangslöchern versehen, so daß die unterhalb des Abstreifers gebildeten Gase unmittelbar nach oben entweichen können.

Der anhand der Figuren vorstehend beschriebene Zweiwellen-Extruder 10 in seinen beiden Ausführungen eignet sich generell für die Trocknung und Entgasung von pastenartigen Materialien, die dabei gleichzeitig einer intensiven Durchmischung unterzogen werden. Von besonderem Vorteil ist der Einsatz des erfindungsgemäßen Extruders in Zusammenhang mit der Herstellung von peroxidhaltigen Pasten.

**Patentansprüche**

1. Entgasungseinrichtung an einem Schnecken-Extruder oder dergl., mit einem wenigstens eine Schnecke (150, 152) aufnehmenden Schneckengehäuse (114), welches mit wenigstens einem in den Schneckenraum (124) des Gehäuses (114) von oben her einmündenden Entgasungskanal (134) und einer am Entgasungskanal (134) angeordneten Rückfördereinrichtung (136) für aus dem Schneckenraum (124) in den Entgasungskanal (134) eingedrungenes Material versehen ist, wobei die Rückfördereinrichtung (136) eine innerhalb des Entgasungskanals (134) mit zur Schneckenachse (146,148) im wesentlichen paralleler Walzenachse (144) angeordnete, zwischen sich und den beiden Längsseitenwänden (139) des Entgasungskanals (134) jeweils einen Durchgang (135, 137) bildende Förderwalze (142) umfaßt, sowie einen sich längs der Förderwalze (142) erstreckenden Abstreifer (141) für auf dem Walzenumfang (143) angelagertes Material aus dem Schneckenraum (124), wobei der Abstreifer (141) in demjenigen Durchgang (137) angeordnet ist, der in Walzendrehrichtung (B') auf den Schneckenraum (124) unmittelbar folgt,

dadurch <u>gekennzeichnet,</u>

daß der Abstreifer (141) etwa in Höhe der Walzenachse (144) oberhalb einer Schnecke (152) des Schneckenraums (124) angeordnet ist, derart, daß vom Abstreifer fallendes Material von der Schnecke (152) mitgenommen wird.

2. Entgasungseinrichtung nach Anspruch 1, dadurch gekennzeichnet, daß der Förderwalzendurchmesser (i) etwa das 0,4- bis 0,9-fache, besser das 0,5- bis 0,7-fache, am besten das etwa 0,65-fache des lichten Abstands (h) der zur Förderwalzenachse (144) parallelen Längsseitenwände (139) des Entgasungskanals (134) beträgt.

3. Entgasungseinrichtung nach Anspruch 2, dadurch gekennzeichnet, daß der lichte Abstand (m) zwischen der Längsseitenwand (135) des in Walzendrehrichtung (B') dem Schneckenraum (124) unmittelbar vorangehenden Durchgangs (135) und dem Walzenumfang (143) etwa das 0,1-bis 0,4-fache, besser das 0,2- bis 0,3-fache, am besten etwa das 0,23-fache des Walzendurchmessers (i) beträgt.

4. Entgasungseinrichtung nach einem der vorhergehenden Ansprüche, gekennzeichnet durch einen das äußere Entgasungskanalende abdeckenden Absaugaufsatz (60; 160) am Schneckengehäuse (14; 114), welcher an eine Vakuumabsaugeinrichtung angeschlossen ist.

5. Entgasungseinrichtung nach Anspruch 4, dadurch gekennzeichnet, daß der Absaugaufsatz eine Vakuumdurchführung (68; 168) für eine die Rückfördereinrichtung antreibende, mit einem Antriebsmotor verkoppelte Antriebswelle (42a; 174) aufweist.

6. Entgasungseinrichtung nach Anspruch 5, dadurch gekennzeichnet, daß die Antriebswelle mit der Förderschneckenwelle (42a) starr verbunden, vorzugsweise mit dieser einstückig ausgebildet, ist.

7. Entgasungseinrichtung nach Anspruch 6, dadurch gekennzeichnet, daß die Antriebswelle (174) mit der Walzenwelle (180) über ein Getriebe, vorzugsweise Stirnradgetriebe (172, 178), verbunden ist.

8. Entgasungseinrichtung nach einem der vorhergehenden Ansprüche, dadurch gekennzeichnet, daß die Rückfördereinrichtung (136) heizbar ist, vorzugsweise durch Hindurchleiten von Heizmedium durch einen Gehäusewandinnenraum (190) eines doppelwandigen Gehäuses (114) der Rückfördereinrichtung.

9. Extruder mit einer Entgasungseinrichtung nach einem der vorhergehenden Ansprüche, dadurch gekennzeichnet, daß er als Doppelwellen-Extruder (10), vorzugsweise mit gleichsinnig drehenden Schnecken (46, 48) ausgebildet ist.

10. Extruder nach Anspruch 9, dadurch gekennzeichnet, daß die Kanalachse senkrecht zu der durch die beiden Schneckenachsen (46, 48; 146, 148) definierten Ebene (53; 153), vorzugsweise in etwa gleichem Abstand, zu beiden Schneckenachsen verläuft.

11. Extruder mit einer Entgasungseinrichtung nach einem der Ansprüche 1 bis 8, dadurch gekennzeichnet, daß er als Einwellen-Extruder mit axial, vorzugsweise impulsartig bewegbarer Schnecke ausgebildet ist.

12. Extruder nach einem der Ansprüche 9 bis 11, gekennzeichnet durch zwei in Richtung der Schneckenraum-Längsachse hintereinander angeordnete Entgasungseinrichtungen (36, 36').

13. Extruder nach einem der Ansprüche 9 bis 12, gekennzeichnet durch eine Dosiereinrichtung, vorzugsweise eine Exzenter-Schneckenpumpe (20), im Bereich der Materialzugabeöffnung des Extruders (10).

## Claims

1. Degasification device on a screw extruder or the like with a screw housing (114) accommodating at least one screw (150, 152) which is provided with at least one degasification canal (134) opening from above into the screw chamber (124) of the housing and a return conveyor device (136) provided on the degasification canal (134) for material which has penetrated from the screw chamber (124) into the degasification canal (134), whereby the return conveyor device (136) comprises a conveyor roller (142) arranged within the degasification canal (134) with roller axis (144) arranged substantially parallel to the screw axis (146, 148) forming between it and the two longitudinal side walls (139) of the degasification canal (134) in each case a passage (135, 137), as well as a wiper (141) extending along the conveyor roller (142) for material from the screw chamber (124) deposited on the roller circumference (143), whereby the wiper (141) is arranged in that passage (137) which follows immediately on the screw chamber (124) in the direction of rotation of the roller (B'), characterised in that the wiper (141) is arranged at about the height of the roller axis (144) above a screw (152) of the screw chamber (124) in such a manner that material falling from the wiper is taken along by the screw (152).

2. Degasification device according to claim 1, characterised in that the conveyor roller (i) is about the 0.4 to 0.9 fold, better the 0.5 to 0.7 fold, the best about the 0.65 fold of the clear distance (h) of the longitudinal side walls (139) of the degasification canal (134) parallel to the conveyor roller axis (144).

3. Degasification device according to claim 2, characterised in that the clear distance (m) between the longitudinal side wall (135) of the passage (135) immediately preceding the screw chamber (135) in the roller direction of rotation (B') and the roller circumference (143) amounts to about the 0.1 to 0.4 fold, better the 0.2 to 0.3 fold, the best about the 0.23 fold of the roller diameter (i).

4. Degasification device according to one of the preceding claims. characterised by a sucking off piece (60, 160), cuvering the outer degasification canal end, on the screw housing (14; 114), which is connected to a vacuum suction device.

5 Degasification device according to claim 4, characterised in that the sucking off piece has a vacuum passage (68; 168) for a driving shaft (42a; 174) operating the return conveyor device, coupled with a driving motor.

6. Degasification device according to claim 5, characterised in that the driving shaft is firmly connected with the conveyor screw shaft (42a) and is preferably formed in one piece with this.

7. Degasification device according to claim 6, characterised in that the driving shaft (174) is connected with the roller shaft (180) via a gear, preferably a spur gear system.

8. Degasification device according to one of the preceding claims, characterised in that the return conveyor device (136) is heatable, preferably by passing heating medium through a housing inner chamber (190) of a double-walled housing (114) of the return conveyor device.

9. Extruder vith a degasification device according to one of the preceding claims, characterised in that it is formed as a double-shaft extruder (10), preferably with screws (46, 48) rotating in the same direction.

10. Extruder according to claim 9, characterised in that the canal axis runs vertically to the plane (53; 153) defined by the two screw axes (46, 48; 146,148), preferably at about the same distance.

11. Extruder with a degasification device according to one of claims 1 to 8, characterised in that it is constructed as a single-shaft extruder with axial, preferably impulse-like movable screw.

12. Extruder according to one of claims 9 to 11, characterised by two degasification devices (36, 36') arranged behind one another in the direction of the screw chamber longitudinal axis.

13. Extruder according to one of claims 9 to 12, characterised by a dosing device, preferably an eccentric screw pump (20), in the region of the material inlet opening of the extruder (10).

**Revendications**

1. Aménagement pour le dégazage sur une extrudeuse à vis ou un dispositif semblable, comportant un boîtier (114) à vis qui renferme au moins une vis sans fin (150, 152) et est muni d'au moins un canal de dégazage (134) qui débouche par en haut dans le compartiment (124) à vis dudit boîtier (114), ainsi que d'un dispositif de réintroduction (136) installé sur le canal de dégazage (134), pour de la matière ayant pénétré dans ce canal de dégazage (134) à partir du compartiment (124) à vis, le dispositif de réintroduction (136) comprenant un cylindre convoyeur (142) qui est situé à l'intérieur du canal de dégazage (143), avec un axe (144) de cylindre sensiblement parallèle à l'axe (146, 148) de la vis, et qui forme un passage respectif (135, 137) entre lui-même et les deux parois (139) des côtés longitudinaux du canal de dégazage (134), ainsi qu'un racleur (141) s'étendant le long du cylindre convoyeur (142), pour de la matière accumulée sur le pourtour (143) de ce cylindre, en provenance du compartiment (124) à vis, le racleur (141) étant disposé dans le passage (137) qui suit directement le compartiment (124) à vis dans le sens (B') de rotation du cylindre,
caractérisé par le fait
que le racleur (141) est disposé approximativement à la hauteur de l'axe (144) du cylindre, au-dessus d'une vis (152) du compartiment (124) à vis, de telle sorte que de la matière tombant de ce racleur soit entraînée par la vis (152).

2. Aménagement de dégazage selon la revendication 1, caractérisé par le fait que le diamètre (i) du cylindre convoyeur représente environ de 0,4 à 0,9 fois, de préférence de 0,5 à 0,7 fois, optimalement environ 0,65 fois l'espacement interne (h) des parois (139) des côtés longitudinaux du canal de dégazage (134), parallèles à l'axe (144) du cylindre convoyeur.

3. Aménagement de dégazage selon la revendication 2, caractérisé par le fait que l'espacement interne (m) entre le pourtour (143) du cylindre, et la paroi (135) du côté longitudinal du passage (135) précédant directement le compartiment (124) à vis dans le sens (B') de rotation du cylindre, représente environ de 0,1 à 0,4 fois, de préférence de 0,2 à 0,3 fois, optimalement environ 0,23 fois le diamètre (i) du cylindre.

4. Aménagement de dégazage selon l'une des revendications précédentes, caractérisé par un chapeau d'aspiration (60; 160) qui coiffe l'extrémité externe du canal de dégazage, se trouve sur le boîtier (14; 114) à vis sans fin, et est raccordé à un dispositif d'évacuation par dépression.

5. Aménagement de dégazage selon la revendication 4, caractérisé par le fait que le chapeau d'aspiration présente un passage à dépression (68; 168), pour un arbre menant (42a; 174) qui entraîne le dispositif de réintroduction et est accouplé à un moteur d'entraînement.

6. Aménagement de dégazage selon la revendication 5, caractérisé par le fait que l'arbre menant est relié rigidement à l'arbre (42a) de la vis sans fin convoyeuse et est réalisé, de préférence, d'un seul tenant avec cet arbre.

7. Aménagement de dégazage selon la revendication 6, caractérisé par le fait que l'arbre menant (174) est relié à l'arbre (180) du cylindre par l'intermédiaire d'une transmission, de préférence une transmission (172, 178) à pignons droits.

8. Aménagement de dégazage selon l'une des revendications précédentes, caractérisé par le fait que le dispositif de réintroduction (136) peut être chauffé, de préférence en faisant circuler un fluide de chauffage par un espace interne (190) de la paroi d'un boîtier (114) à paroi double dudit dispositif de réintroduction.

9. Extrudeuse équipée d'un aménagement de dégazage selon l'une des revendications précédentes, caractérisée par le fait qu'elle est réalisée sous la forme d'une extrudeuse (10) à arbre jumelé présentant, de préférence, des vis sans fin (46, 48) qui tournent dans le même sens.

10. Extrudeuse selon la revendication 9, caractérisée par le fait que l'axe du canal s'étend perpendiculairement au plan (53; 153) délimité par les deux axes (46, 48; 146, 148) des vis, de préférence à une distance sensiblement égale des deux axes des vis.

11. Extrudeuse équipée d'un aménagement de dégazage selon l'une des revendications 1 à 8, caractérisée par le fait qu'elle est réalisée sous la forme d'une extrudeuse à un seul arbre munie d'une vis sans fin mobile axialement, de préférence par impulsions.

12. Extrudeuse selon l'une des revendications 9 à 11, caractérisée par deux aménagements de dégazage (36, 36'), agencés en succession dans la direction de l'axe longitudinal du compartiment à vis.

13. Extrudeuse selon l'une des revendications 9 à 12, caractérisée par un dispositif doseur, de préférence une pompe à vis (20) à excentrique située au voisinage de l'orifice d'alimentation de l'extrudeuse (10) en matière.

## FIG. 1

## FIG. 2

FIG. 3